(19) Europäisches Patentamt
European Patent Office
Office européen des brevets

(11) **EP 3 410 591 B1**

(12) **EUROPEAN PATENT SPECIFICATION**

(45) Date of publication and mention
of the grant of the patent:
**25.03.2020 Bulletin 2020/13**

(51) Int Cl.:
***H02M 1/36*** *(2007.01)* ***G06F 1/30*** *(2006.01)*

(21) Application number: **17173875.0**

(22) Date of filing: **01.06.2017**

(54) **ENERGY SUPPLY SYSTEM AND ENERGY SUPPLY METHOD**

ENERGIEZUFUHRSYSTEM UND ENERGIEZUFUHRVERFAHREN

SYSTÈME D'ALIMENTATION EN ÉNERGIE ET PROCÉDÉ D'ALIMENTATION EN ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.12.2018 Bulletin 2018/49**

(73) Proprietor: **Vestel Elektronik Sanayi ve Ticaret A.S. 45030 Manisa (TR)**

(72) Inventor: **SARIARSLAN, Muhammet Kürsat 45030 Manisa (TR)**

(74) Representative: **Ascherl, Andreas et al KEHL, ASCHERL, LIEBHOFF & ETTMAYR Patentanwälte - Partnerschaft Emil-Riedel-Strasse 18 80538 München (DE)**

(56) References cited:
**US-A- 6 147 477      US-A1- 2013 194 841 US-A1- 2013 207 628**

**Description**

**TECHNICAL FIELD**

The invention relates to an energy supply system for a multi-voltage electronic device and to an energy supply method.

**BACKGROUND OF THE INVENTION**

Although applicable to any electric or electronic system that requires different operating voltages, the present invention will mainly be described in conjunction with consumer electronic devices, like e.g. TV sets.

In modern consumer electronic devices a plurality of different electronic components are provided. The different electronic components may each require different supply voltages. For example digital controllers may require operating voltages of about 3,3 V or 5 V, while e.g. LED backlights may require higher voltages of about 12 V or 24 V. Therefore, different voltage regulators may be provided in such an electronic device.

The various voltage regulators usually have capacitors at their inputs and outputs, and the connected electronic circuits may also comprise capacitances that store electrical energy. Therefore, in case of a power off the voltages do not drop to zero immediately. Furthermore, due to the currents drawn by the different circuits from the different voltage regulators and the different capacitances present on the voltage lines, the different voltages fade away with different fall or decay times. During this uncontrolled state of the voltages, some of the electronic circuits may be stopped while other electronic circuits keep working. Therefore, for example the event of system shutdown, some of the electronic circuits that need to be reset may not be reset. As a result, the systems may be locked and cannot resume operation properly when the system is energized again.

Therefore, at power surges or fast power-off situations electronic devices with different voltage levels may suffer difficulties like e.g. lock-ups.

The reboot or restart of the electronic system may e.g. be delayed for a safe amount of time to overcome the problems described above. However, depending on the capacitances and the loads, this safe amount of time may amount to several seconds or even minutes. Such long waiting times may not be acceptable in certain applications.

Document US 6 147 477 A discloses a DC/DC converter where fall times of voltage outputs are equalized with a control unit. Document US 2013/0 207 628 A1 discloses a switching regulator with a control circuit that during shutdown controls an output voltage to decrease to a shutdown threshold.

Accordingly, there is a need for an improved power supply for electronic devices.

**SUMMARY OF THE INVENTION**

The present invention provides an energy supply system with the features of claim 1 and an energy supply method with the features of claim 4.

As described above, in electronic devices with different voltage levels different fading or decay times may be present for different supply voltages in the electronic devices due to different capacitances and loads on the respective voltage regulators.

The present invention instead of waiting for all voltages to fade out uses another approach. The present invention provides the energy supply system with at least two voltage regulators that each provide a respective operating voltage. The output voltages may, but need not necessarily, be different, and the voltage regulators may supply different electronic components of the multi-voltage electronic device. This means that different loads may be applied to the outputs of the voltage regulators and that the fall times of the operating voltages provided by the voltage regulators may be different.

The present invention is based on the idea of equalizing the different fall times using switchable resistors. The switchable resistors may be resistors that may be switched-on or connected to an output of a respective voltage regulator and switched-off or disconnected from the output of the respective voltage regulator.

The switching is performed by the control unit of the energy supply system. The control unit may e.g. detect power surges or drops at the main voltage supply that lead to a shut-down of the multi-voltage electronic device. In such cases the control unit may switch-on or connect the switchable resistors to the outputs of the voltage regulators such that the fall or fade-out times of the single operating voltages are equalized. During normal operation the switchable resistances may be disconnected from the outputs.

Switching-on may refer e.g. to electrically connecting the resistors between the output of the respective voltage regulator and an electrical ground network or connection of the multi-voltage electronic device.

The control unit may switch resistors to outputs that provide a high operating voltage and comprise high capacitances with a low load. Providing the additional resistor, i.e. an additional load, accelerates the fade-out of the respective operating voltage. The control unit may e.g. provide additional loads of different sizes, i.e. resistances, to the single outputs of the voltage regulators, such that the fall or fade-out times are equalized with regard to the fastest fall or fade-out time in the energy supply system that is present without any additional load, i.e. switchable resistor.

As can be seen, with the present invention an even voltage fade-out in a multi-voltage electronic device is possible. Powering down the multi-voltage electronic device is therefore accelerated and the multi-voltage electronic device may be quickly powered up again with a minimal dead time or holding time.

Further embodiments of the present invention are subject of the further subclaims and of the following description, referring to the drawings.

In an embodiment, the energy supply system may comprise a current sensor for each one of the outputs of the voltage regulators, wherein the current sensors may be configured to measure the current for the respective output.

The current sensors may e.g. comprise shunt resistors provided in the power path of the output of the respective voltage regulator in combination with a calculation function in the control unit. Such a shunt resistor may e.g. be a resistor with a low resistance like e.g. 1 $\Omega$. The control unit may measure the voltage drop $U_{Rs}$ over the shunt resistors to determine the respective current using the formula $I[A]=U_{Rs}[V]/R[\Omega]$. With a resistance of 1 $\Omega$, the formula is simplified to $I[A]=U_{Rs}[V]/1[\Omega]$. The voltage drop U may be determined by measuring the voltage at the input of the shunt resistor and the voltage at the output of the shunt resistor.

In an embodiment, the control unit may be configured to determine the load or impedance on the outputs based on the current measurements.

The load on the respective output may be determined using the formula R=U/I, with U being the output voltage at the respective output and I being the current as determined above. If the shunt resistor is the first element in the power path of the respective output, the voltage measured at the input of the respective shunt resistance may be used as the output voltage at the respective output. As an alternative the output voltage may be known or predetermined in the control unit. In addition, dedicated voltage sensors may be used. Such sensors may e.g. be A/D converters of the control unit.

In a further embodiment, the control unit may be configured to control the main voltage supply to turn off the main voltage and measure a fall-time for the single operating voltages without any of the switchable resistors connected. The fall-time may e.g. comprise the time from turning off the main voltage until the respective voltage drops to 1/e, i.e. about 37%, of its maximum value.

The time that is required for the voltage to drop to about 37% or 1/e after the respective operating voltage is switched off, defines the time constant T for the respective circuit. The time constant is further defined as $T=R*C$. The value of R is known from the calculations above and the time T may be measured by the control unit. Therefore, the control unit may now calculate the capacitance C of the respective circuit by calculating C=T/R.

In another embodiment, the control unit may be configured to calculate for every output of the voltage regulators the required resistance to reduce a respective time constant to a predetermined one of the measured fall times, especially to the lowest measured fall time.

The control unit may compare all measured fall times, i.e. time constants, for the single outputs or operating voltages. The lowest fall time or time constant may then serve the basis for further calculations. Although here the lowest time constant or shortest fall time is selected, it is understood that any other one of the fall times may be selected or that a specific required time constant may be predetermined.

For example a first time constant $T_1 = R_1 * C_1$ is the lowest time constant, and a second time constant $T_2 = R_2 * C_2$, must be reduced. $R_2$ may be $R_m + R_e$, wherein $R_m$ may be the measured or above calculated resistance or impedance of the respective circuit and $R_e$ is the resistance required to equalize or reduce the second time constant. $R_e$ may be calculated as follows:

$$T_2 = T_1$$

$$R_1 * C_1 = R_2 * C_2 = (R_m + R_e) * C_2$$

$$R_e = (R_1 * C_1 / C_2) - R_m$$

The such-calculated value for $R_e$ is the resistance that is required, i.e. by which $R_m$ must modified e.g. reduced, to reduce the second time constant $T_2$. Usually, $R_e$ will be a negative value, since the time constant must be reduced. The control unit may therefore calculate $(R_m + R_e) = R$, based on a parallel connection of $R_m$ with the respective switchable resistance.

It is understood that the above explains the necessary calculations for operating voltages with the same amplitudes or absolute values. It is however understood, that analogous calculations may be performed for different voltages based on the formula:

$$V_c(t) = V_{abs}(1 - 1/(e^{\wedge}(t/T)))$$

If the switchable resistors are provided between the outputs of the voltage regulators and ground, they will be electrically arranged in parallel to the measured impedance or resistance $R_m$ of the respective circuit. The control unit may therefore calculate the value of the switchable resistance $R_{sw}$ that is required to reduce $R_m$ to match $R = (R_m + Re)$:

$$R_{sw} = 1/(R + 1/R_m)$$

It is understood that the switchable resistors may not comprise the exact required value. However the switchable resistors may e.g. comprise a plurality of resistors with different values and the control unit may e.g. select the most appropriate valued resistance, i.e. the resistance with the value that is closest to $R_{sw}$, for the respective output.

It is understood, that the control unit may e.g. perform the determination of $R_{sw}$ only once, e.g. during a setup or configuration of the respective multi-voltage electronic device. The control unit may then store the calculated values of $R_{sw}$ for the single outputs of the voltage regulators and use the stored values when the multi-voltage electronic device is turned-off or powered down during normal operation.

In an embodiment, the values of $R_{sw}$ for the single outputs of the voltage regulators may be measured during development or prototyping of the respective multi-voltage electronic device. The switchable resistors may then be provided with exactly the required values.

In a further embodiment, the switchable resistors may be arranged in a switching matrix that may be coupled to the outputs of the voltage regulators and is controllable by the control unit to connect specific ones of the switchable resistors to a respective one of the outputs.

The switching matrix may e.g. comprise for every output of the voltage regulators a plurality of resistors that may switchably be connected in parallel between the respective output and ground by switches. The switching matrix therefore allows the control unit to combine different resistors of different or same values in parallel to create a required resistance.

With the switching matrix the energy supply system may flexibly be used in any multi-voltage electronic device without the need to specifically adapt the energy supply system prior to installation in the multi-voltage electronic device. Instead, the control unit may e.g. perform the above described determination of the required resistances $R_{sw}$ during a set-up or line-end configuration. During normal operation the control unit may then control the switching matrix accordingly to create the respective resistance values.

In another embodiment, the switchable resistors may comprise one resistor for each one of the outputs of the voltage regulators, and the control unit may be configured to temporarily connect the switchable resistors to the respective outputs when the main supply voltage is turned off.

With a single resistor the possible modification of the time constant for the respective output is limited. However, the resistors may e.g. be dimensioned such that the time constants are strongly lowered, even below the required time constant. The control unit may then determine the amount of time that the resistance is required to drop the voltage at the respective output enough, such that the resistor is not required any more. This means that a very quick voltage drop will be caused by the resistors and after a short amount of time the resistor is disconnected again and the original resistance or capacitance of the respective circuit may continue to deplete the stored energy, i.e. further reduce the voltage, at the regular speed of the respective circuit. The control unit may e.g. calculate the timing that is required to achieve an equalized fade-out of the different operating voltages based on the fixed value resistances.

## BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:

Fig. 1 shows a block diagram of an embodiment of an energy supply system according to the present invention;

Fig. 2 shows a block diagram of another embodiment of an energy supply system according to the present invention;

Fig. 3 shows a block diagram of a section of another embodiment of an energy supply system according to the present invention; and

Fig. 4 shows a flow diagram of an embodiment of an energy supply method according to the present invention.

In the figures like reference signs denote like elements unless stated otherwise.

## DETAILED DESCRIPTION OF THE DRAWINGS

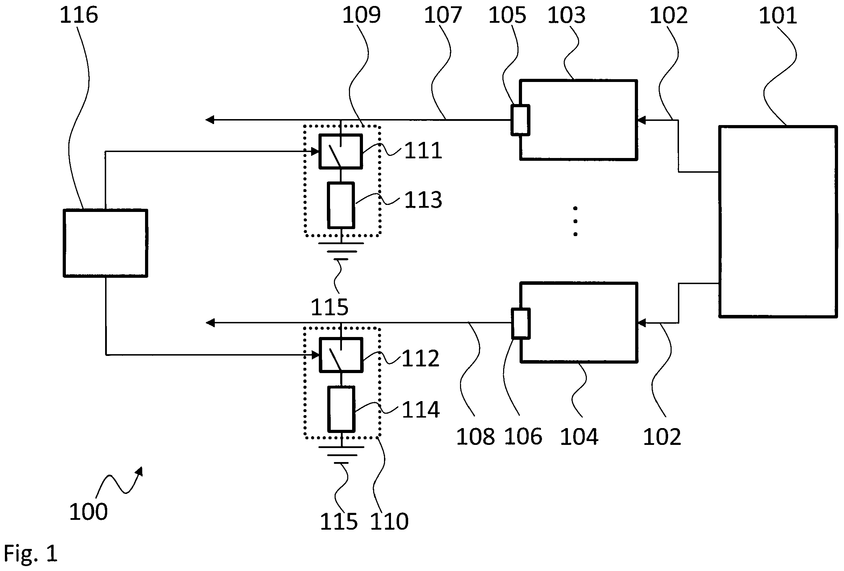

Fig. 1 shows a block diagram of an energy supply system 100. The energy supply system 100 comprises a main voltage supply 101 that is connected to two exemplary voltage regulators 103, 104. It is understood that the number of two voltage regulators 103, 104 is just exemplarily chosen and that further voltage regulators are possible (hinted at by three dots). The voltage regulators 103, 104 each comprise an output 105, 106 that provides a respective operating voltage 107, 108 for electrical components of a multi-voltage electronic device (not shown). In addition to the electrical or electronic components of the multi-voltage electronic device, the outputs 105, 106 are also each connected to a switchable resistor 109, 110. The switchable resistors 109, 110 are provided between the respective output 105, 106 and ground 115. In the energy supply system 100 the switchable resistors 109, 110 are shown as comprising a switching device 111, 112 and a series resistor 113, 114. The switches 111, 112 may e.g. be transistor based. It is understood, that this arrangement is just exemplarily shown and that any other arrangement may be used that allows connecting and disconnecting the resistors 113, 114 to the respective outputs 105, 106. The switchable resistors 109, 110 may e. g. comprise a transistor on a PCB and the resistors 113, 114 may be provided as copper traces with respective widths or as resistor paste that is printed on the PCB.

The main voltage supply 101 may e.g. be provided with a mains power, e.g. a 230 V or 110 V AC power. The main voltage supply 101 may e.g. perform an AC/DC conversion or rectification and reduce the voltage to a main voltage 102. The main voltage supply 101 may e.g. be provided as an internal or external power supply device. The main voltage 102 may e.g. be a 12 V voltage, a 24 voltage or any other adequate voltage. The main voltage 102 is provided to the voltage regulators 103, 104 that convert the main voltage 102 into operating voltages 107, 108 that may then be used by the different electric or electronic components of the multi-voltage electronic device.

The different operating voltages 107, 108 may e.g. comprise a 5 V or 3,3 V voltage for powering digital control circuitry of the multi-voltage electronic device. Another one of the operating voltages 107, 108 may e.g. comprise a 12 V or 24 V or higher voltage for powering e.g. actuators or lighting devices in the multi-voltage electronic device.

Although not shown, it is understood that the voltage regulators 103, 104 as well as the electric or electronic components of the multi-voltage electronic device may be provided with capacitors at their inputs and outputs. These capacitors provide a specific capacitance for every operating voltage circuit, i.e. on every one of the outputs 105, 106. Therefore, when turning off the main voltage 102 these capacitances will need to be discharged. The time that is needed to discharge the single capacitances may vary for every operating voltage 107, 108 and depends on the total capacitance, the impedance of the respective electric or electrical components and the absolute value of operating voltages 107, 108. Therefore, the fade-out of the single operating voltages 107, 108 may have different durations. As already indicated this may lead to unexpected or unwanted behavior of the multi-voltage electronic device.

The operating voltages 107, 108 therefore comprise the control unit 116 that controls the switchable resistors 109, 110 when the main voltage 102 is turned off. The control unit 116 in that case will switch-on or connect the switchable resistors 109, 110 to the respective output 105, 106. The switchable resistors 109, 110 will be connected between the respective output 105, 106 and ground 115 and will therefore reduce the total impedance of the load on the respective output 105, 106. This reduction of the impedance will lead to a quicker fade-out of the respective operating voltage 107, 108.

By switching on or connecting the switchable resistors 109, 110, the control unit 116 may therefore equalize the fade-out times of the operating voltages 107, 108 by applying an impedance reduction to the operating voltages 107, 108 with longer fade-out durations. All fade-out durations may therefore be reduced to the shortest fade-out interval. This leads to a controlled and synchronized switching-off of all different loads in the multi-voltage electronic device and eliminates unwanted behaviors.

The values for the resistor 113, 114 may e.g. be predetermined during development or prototyping of the multi-voltage electronic device. The fade-out times, the impedances and/or the capacitances for the single operating voltages 107, 108 may e.g. be determined by measurements on a prototype of the multi-voltage electronic device. The values of the resistor 113, 114 may then be determined such that the fade-out times for the single operating voltages 107, 108 are at least approximately equalized. It is further understood, that specific resistance values may e.g. be created by series or parallel connections of standard value resistors.

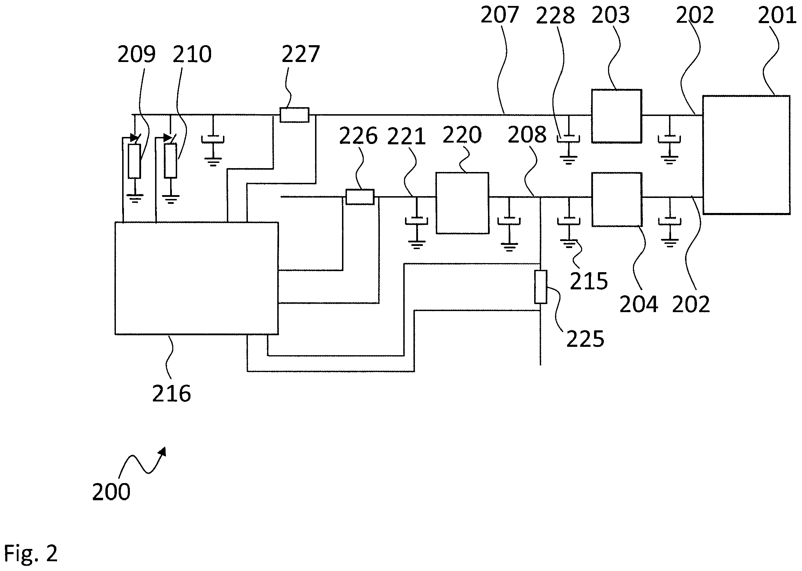

Fig. 2 shows a block diagram of energy supply system 200. The energy supply system 200 is based on the energy supply system 100 and comprises further elements. These elements allow the energy supply system 200 to autonomously determine the values for the switchable resistors 209, 210 that are required for equalizing the fade-out times of the operating voltages 207, 208, 221. The energy supply system 200 comprises a main voltage supply 201 that is connected to two exemplary voltage regulators 203, 204. The voltage regulators 203, 204 each provide a respective operating voltage 207, 208 for electrical components of a multi-voltage electronic device. The operating voltage 208 is in addition provided to a third voltage regulator 220 that provides a third operating voltage 221. In the energy supply system 200 the inputs and the outputs of the voltage regulators 203, 204, 220 are provided with capacitors 228. For sake of clarity only one of the capacitors 228 is referenced with reference sign 228. The capacitors 228 may be smoothing or filter capacitors and sum up to a specific capacitance in each of the operating voltage circuits.

In the energy supply system 200 current sensors in the form of shunt resistors 225, 226, 227 are provided in the supply lines to supply the respective operating voltages 207, 208, 221 to the components of the multi-voltage electronic device. With the shunt resistors 225, 226, 227 the control unit 216 may measure the currents in the single operating voltage circuits. As indicated above the control unit 216 may then determine the load on the outputs based on the current measurements.

In a setup or configuration mode, the control unit 216 may e.g. turn off the main voltage 202 and measure a fall-time for the single operating voltages 207, 208, 221 without any of the switchable resistors 209, 210 connected. The control unit 216 may e.g. measure the fall-time from turning off the main voltage 202 until the respective operating voltage 207, 208, 221 drops to 1/e of its maximum value. This time therefore represents the time constant of the respective operating voltage circuit.

With the knowledge of the fall-times the control unit 216 may then calculate for every output of the voltage regulators 203, 204, 220 the required resistance to reduce a respective fall time or time constant to a predetermined one of the measured fall times, especially to the lowest measured fall time. Regarding the required calculations reference is made to the above already explained calculations.

In the energy supply system 200 two switchable resistors 209, 210 are exemplarily shown for the operating voltage 207, i.e. the respective operating voltage circuit. It is understood, that one or more switchable resistors may be provided for every one of the operating voltages 207, 208, 221. The control unit 216 may form or approximate the exact required value of the switchable resistors 209, 210 by selecting which resistors are connected to the operating voltage circuits in parallel.

Instead of approximating a required resistance value the control unit 216 may also perform a timely controlled connection of a single switchable resistor to each of the operating voltage circuits. The energy supply system 200 may e.g. comprise switchable resistors or rather low resistance values. Such switchable resistors will provide for a rapid fade-out of the respective operating voltages 207, 208, 221. By deactivating the switchable resistors in a timely controlled manner, the control unit 216 may provide for the single operating voltages 207, 208, 221 reaching a required voltage level at approximately the same time, in any case timely more close to each other than without the activation of the switchable resistors.

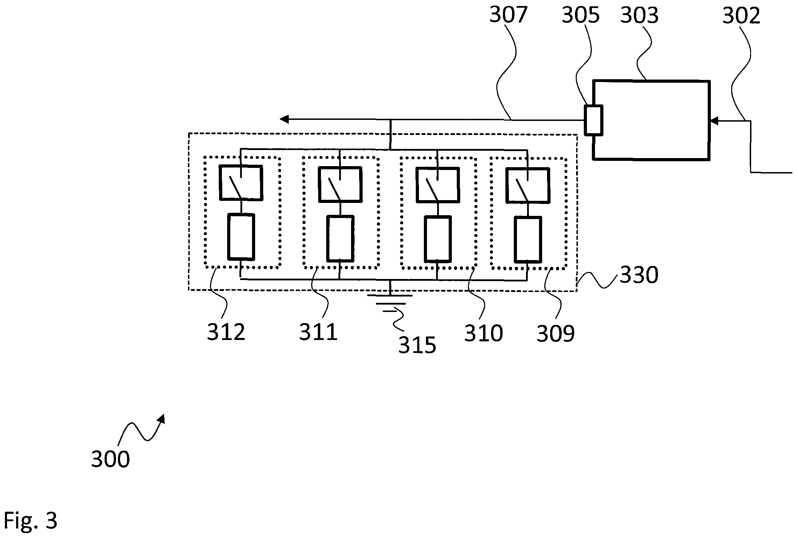

Fig. 3 shows a block diagram of another energy supply system 300. The energy supply system 300 is focused on the possibility to connect different switchable resistors 309, 310, 311, 312 in parallel to a single operating voltage circuit, i.e. the respective operating voltage 307. The energy supply system 300 comprises an exemplary switching matrix 330 that in this example comprises the four switchable resistors 309, 310, 311, 312. It is understood, that although the switching matrix 330 is only shown for a single operating voltage 307 a dedicated switching matrix 330 may be applied for any number the operating voltages.

In the switching matrix 330 four switchable resistors 309, 310, 311, 312 are connected in parallel and the common input is connected to the operating voltage 307. The common output is connected to ground 315. Therefore, any selection of the four switchable resistors 309, 310, 311, 312 may be connected in parallel to any load that may be present on the operating voltage 307, i.e. the respective operating voltage circuit. Every one of the switchable resistors 309, 310, 311, 312 comprises a switch and a series resistor (not explicitly referenced). The control unit (not shown) may therefore activate any one of the switchable resistors 309, 310, 311, 312 as required.

It is understood that the number of four switchable resistors 309, 310, 311, 312 is just exemplarily chosen and that any other number of switchable resistors 309, 310, 311, 312 may be provided in the switching matrix 330.

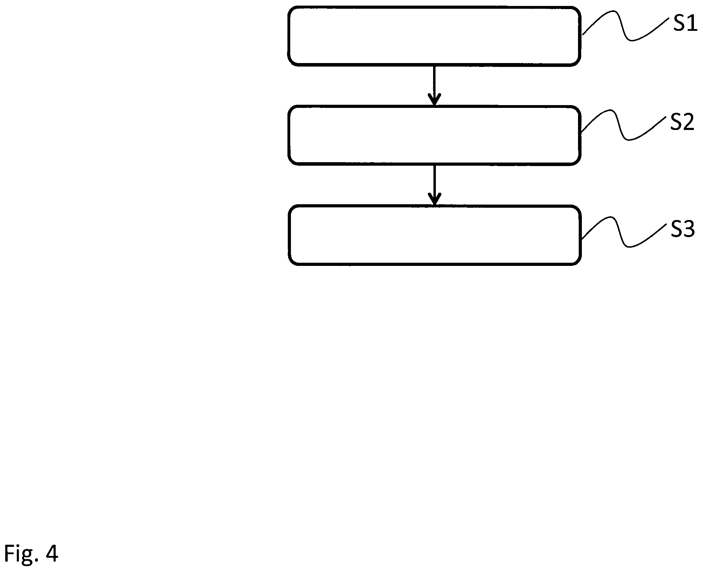

For sake of clarity, the reference signs used above in the description of the apparatus based Figs. 1 - 3 will also be used in the description of the method based Fig. 4.

Fig. 4 shows a flow diagram of an energy supply method for supplying electrical energy in a multi-voltage electronic device.

The energy supply method comprises providing S1 a main supply voltage, converting S2 the main voltage 102, 202, 302 into a plurality of operating voltages 107, 108, 207, 208, 221, 307 of predefined voltage levels, and connecting S3 at least one switchable resistor 109, 110, 209, 210, 309, 310, 311, 312 to at least one of the operating voltages 107, 108, 207, 208, 221, 307 when the main supply voltage is turned off such that the fall times of the operating voltages 107, 108, 207, 208, 221, 307 at the outputs 105, 106, 305 of the voltage regulators 103, 104, 203, 204, 220, 303 are equalized.

The required values for the switchable resistor 109, 110, 209, 210, 309, 310, 311, 312 may be determined in the method. For example, the electrical currents for the operating voltages 107, 108, 207, 208, 221, 307 may be measured. And the load on the outputs 105, 106, 305 may be determined based on the current measurements.

The energy supply method may further comprise turning off the main voltage 102, 202, 302 and measuring a fall-times for the single operating voltages 107, 108, 207, 208, 221, 307 without any of the switchable resistors 109, 110, 209, 210, 309, 310, 311, 312 connected. The fall-times measured may e.g. refer to the time from turning off the main voltage 102, 202, 302 until the respective operating voltage 107, 108, 207, 208, 221, 307 drops to 1/e of its maximum value.

In addition, for every operating voltage 107, 108, 207, 208, 221, 307 the required resistance to reduce a respective time constant to a predetermined one of the measured fall times, especially to the lowest measured fall time, may be calculated. The exact details of this calculation are detailed above and will not be repeated here for sake of brevity.

The switchable resistors 109, 110, 209, 210, 309, 310, 311, 312 may be arranged in a switching matrix that is coupled to sources of the operating voltages 107, 108, 207, 208, 221, 307. Connecting S3 may then comprise controlling the switching matrix to connect specific ones of the switchable resistors 109, 110, 209, 210, 309, 310, 311, 312 to respective ones of the outputs 105, 106, 305.

As an alternative, the switchable resistors 109, 110, 209, 210, 309, 310, 311, 312 may comprise one resistor for each one of the outputs 105, 106, 305 of the voltage regulators 103, 104, 203, 204, 220, 303. Connecting S3 may then comprise temporarily connecting the switchable resistors 109, 110, 209, 210, 309, 310, 311, 312 to the respective outputs 105, 106, 305 when the main supply voltage is turned off.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention provides an energy supply system 100, 200, 300 for a multi-voltage electronic device, the energy supply system 100, 200, 300 comprising a main voltage supply 101, 201 configured to provide a main voltage 102, 202, 302, a plurality of voltage regulators 103, 104, 203, 204, 220, 303 each configured to convert the main voltage 102, 202, 302 into a respective operating voltage 107, 108, 207, 208, 221, 307 of a predefined voltage level and comprising a voltage output 105, 106, 305 configured to output the respective operating voltage 107, 108, 207, 208, 221, 307, at least one switchable resistor 109, 110, 209, 210, 309, 310, 311, 312 connected to each of the outputs of the voltage regulators 103, 104, 203, 204, 220, 303, and a control unit 116, 216 configured to connect the switchable resistors 109, 110, 209, 210, 309, 310, 311, 312 to the outputs of the voltage regulators 103, 104, 203, 204, 220, 303 when the main supply voltage is turned off such that the fall times of the operating voltages 107, 108, 207, 208, 221, 307 at the outputs of the voltage regulators 103, 104, 203, 204, 220, 303 are equalized.

List of reference signs

| | |
|---|---|
| 100, 200, 300 | energy supply system |
| 101, 201 | main voltage supply |
| 102, 202, 302 | main voltage |
| 103, 104, 203, 204, 220, 303 | voltage regulator |
| 105, 106, 305 | output |
| 107, 108, 207, 208, 221, 307 | operating voltage |
| 109, 110, 209, 210, 309, 310, 311, 312 | switchable resistor |
| 111, 112 | switch |
| 113, 114 | resistor |
| 115, 215, 315 | ground |
| 116, 216 | control unit |
| 225, 226, 227 | shunt resistor |
| 228 | capacitors |
| 330 | switching matrix |
| S1 - S3 | method steps |

**Claims**

1. Energy supply system (100, 200, 300) for a multi-voltage electronic device, the energy supply system (100, 200, 300) comprising:

    a main voltage supply (101, 201) configured to provide a main voltage (102, 202, 302),
    a plurality of voltage regulators (103, 104, 203, 204, 220, 303) each configured to convert the main voltage (102, 202, 302) into a respective operating voltage (107, 108, 207, 208, 221, 307) of a predefined voltage level, each voltage regulator comprising a voltage output (105, 106, 305) configured to output the respective operating voltage (107, 108, 207, 208, 221, 307),
    at least one switchable resistor (109, 110, 209, 210, 309, 310, 311, 312) between each one of the outputs (105, 106, 305) of the voltage regulators (103, 104, 203, 204, 220, 303) and ground (115, 215, 315), and
    a control unit (116, 216) configured to switch-on the switchable resistors (109, 110, 209, 210, 309, 310, 311, 312) between the outputs (105, 106, 305) of the voltage regulators (103, 104, 203, 204, 220, 303) and ground (115, 215, 315) when the main supply voltage is turned off such that the fall times of the operating voltages (107, 108, 207, 208, 221, 307) at the outputs (105, 106, 305) of the voltage regulators (103, 104, 203, 204, 220, 303) are equalized;
    the system further comprising a current sensor (225, 226, 227) for each one of the outputs (105, 106, 305) of the voltage regulators (103, 104, 203, 204, 220, 303), wherein the current sensors (225, 226, 227) are configured to measure the current for the respective output (105, 106, 305);
    wherein the control unit (116, 216) is configured to determine the load on the outputs (105, 106, 305) based on the current measurements;
    wherein the control unit (116, 216) is further configured to control the main voltage supply (101, 201) to turn off the main voltage (102, 202, 302) and measure a fall-time for the single operating voltages (107, 108, 207, 208, 221, 307) without any of the switchable resistors (109, 110, 209, 210, 309, 310, 311, 312) switched-on; and
    wherein the control unit (116, 216) is further configured to calculate for every output (105, 106, 305) of the voltage regulators (103, 104, 203, 204, 220, 303) the required resistance to reduce a respective fall time or time constant to a predetermined one of the measured fall times.

2. Energy supply system (100, 200, 300) according to claim 1, wherein the switchable resistors (109, 110, 209, 210, 309, 310, 311, 312) are arranged in a switching matrix that is coupled to the outputs (105, 106, 305) of the voltage regulators (103, 104, 203, 204, 220, 303) and is controllable by the control unit (116, 216) to connect specific ones of the switchable resistors (109, 110, 209, 210, 309, 310, 311, 312) to a respective one of the outputs (105, 106, 305).

3. Energy supply system (100, 200, 300) according to any one of the preceding claims 1 to 5, wherein the switchable resistors (109, 110, 209, 210, 309, 310, 311, 312) comprise one resistor for each one of the outputs (105, 106, 305) of the voltage regulators (103, 104, 203, 204, 220, 303), and wherein the control unit (116, 216) is configured to temporarily connect the switchable resistors (109, 110, 209, 210, 309, 310, 311, 312) to the respective outputs (105, 106, 305) when the main supply voltage is turned off.

4. Energy supply method for supplying electrical energy in a multi-voltage electronic device, the energy supply method comprising:

    providing (S1) a main supply voltage,
    converting (S2) the main voltage (102, 202, 302) into a plurality of operating voltages (107, 108, 207, 208, 221, 307) of predefined voltage levels, and
    connecting (S3) at least one switchable resistor (109, 110, 209, 210, 309, 310, 311, 312) between at least one of the operating voltages (107, 108, 207, 208, 221, 307) and ground (115, 215, 315) when the main supply voltage is turned off such that the fall times of the operating voltages (107, 108, 207, 208, 221, 307) at the outputs (105, 106, 305) of the voltage regulators (103, 104, 203, 204, 220, 303) are equalized;
    measuring the electrical currents for the operating voltages (107, 108, 207, 208, 221, 307);
    determining the load on the outputs (105, 106, 305) based on the current measurements;
    comprising turning off the main voltage (102, 202, 302) and measuring a fall-time for the single operating voltages (107, 108, 207, 208, 221, 307) without any of the switchable resistors (109, 110, 209, 210, 309, 310, 311, 312) connected, and
    calculating for every operating voltage (107, 108, 207, 208, 221, 307) the required resistance to reduce a respective time constant to a predetermined one of the measured fall times.

**5.** Energy supply method according to claim 4, wherein the switchable resistors (109, 110, 209, 210, 309, 310, 311, 312) are arranged in a switching matrix that is coupled to sources of the operating voltages (107, 108, 207, 208, 221, 307) and wherein connecting (S3) comprises controlling the switching matrix to connect specific ones of the switchable resistors (109, 110, 209, 210, 309, 310, 311, 312) to respective ones of the outputs (105, 106, 305).

**6.** Energy supply method according to any one of the preceding claims 4 and 5, wherein the switchable resistors (109, 110, 209, 210, 309, 310, 311, 312) comprise one resistor for each one of the outputs (105, 106, 305) of the voltage regulators (103, 104, 203, 204, 220, 303), and wherein connecting (S3) comprises temporarily connect the switchable resistors (109, 110, 209, 210, 309, 310, 311, 312) to the respective outputs (105, 106, 305) when the main supply voltage is turned off.

**Patentansprüche**

**1.** Energieversorgungssystem (100, 200, 300) für eine Mehrspannungs-Elektronikvorrichtung, wobei das Energieversorgungssystem (100, 200, 300) aufweist:

eine Hauptspannungsversorgung (101, 201), die konfiguriert ist, um eine Hauptspannung (102, 202, 302) bereitzustellen,
eine Vielzahl von Spannungsreglern (103, 104, 203, 204, 220, 303), die jeweils konfiguriert sind, um die Hauptspannung (102, 202, 302) in eine jeweilige Betriebsspannung (107, 108, 207, 208, 221, 307) eines vordefinierten Spannungsniveaus umzuwandeln, wobei jeder Spannungsregler einen Spannungsausgang (105, 106, 305) umfasst, der konfiguriert ist, um die jeweilige Betriebsspannung (107, 108, 207, 208, 221, 307) auszugeben, mindestens einen schaltbaren Widerstand (109, 110, 209, 210, 309, 310, 311, 312) zwischen jedem der Ausgänge (105, 106, 305) der Spannungsregler (103, 104, 203, 204, 220, 303) und Masse (115, 215, 315) und eine Steuereinheit (116, 216), die konfiguriert ist, um die schaltbaren Widerstände (109, 110, 209, 210, 309, 310, 311, 312) zwischen den Ausgängen (105, 106, 305) der Spannungsregler (103, 104, 203, 204, 220, 303) und Masse (115, 215, 315) einzuschalten, wenn die Hauptversorgungsspannung abgeschaltet wird, so dass die Abfallzeiten der Betriebsspannungen (107, 108, 207, 208, 221, 307) an den Ausgängen (105, 106, 305) der Spannungsregler (103, 104, 203, 204, 220, 303) ausgeglichen sind;
wobei das System ferner einen Stromsensor (225, 226, 227) für jeden der Ausgänge (105, 106, 305) der Spannungsregler (103, 104, 203, 204, 220, 303) umfasst, wobei die Stromsensoren (225, 226, 227) konfiguriert sind, um den Strom für den jeweiligen Ausgang (105, 106, 305) zu messen;
wobei die Steuereinheit (116, 216) konfiguriert ist, um die Last an den Ausgängen (105, 106, 305) basierend auf den Strommessungen zu bestimmen;
wobei die Steuereinheit (116, 216) ferner konfiguriert ist, um die Hauptspannungsversorgung (101, 201) zu steuern, um die Hauptspannung (102, 202, 302) abzuschalten, und eine Abfallzeit für die einzelnen Betriebsspannungen (107, 108, 207, 208, 221, 307) zu bestimmen, ohne dass einer der schaltbaren Widerstände (109, 110, 209, 210, 309, 310, 311, 312) eingeschaltet ist; und
wobei die Steuereinheit (116, 216) ferner konfiguriert ist, um für jeden Ausgang (105, 106, 305) der Spannungsregler (103, 104, 203, 204, 220, 303) den erforderlichen Widerstand zu berechnen, um eine entsprechende Abfallzeit oder Zeitkonstante auf eine vorbestimmte der gemessenen Abfallzeiten zu reduzieren.

**2.** Energieversorgungssystem (100, 200, 300) nach Anspruch 1, wobei die schaltbaren Widerstände (109, 110, 209, 210, 309, 310, 311, 312) in einer Schaltmatrix angeordnet sind, die mit den Ausgängen (105, 106, 305) der Spannungsregler (103, 104, 203, 204, 220, 303) gekoppelt ist und die durch die Steuereinheit (116, 216) steuerbar ist, um bestimmte der schaltbaren Widerstände (109, 110, 209, 210, 309, 310, 311, 312) an einen der jeweiligen Ausgänge (105, 106, 305) anzuschließen.

**3.** Energieversorgungssystem (100, 200, 300) nach einem der vorhergehenden Ansprüche 1 bis 5, wobei die schaltbaren Widerstände (109, 110, 209, 210, 309, 310, 310, 311, 312) jeweils einen Widerstand für jeden der Ausgänge (105, 106, 305) der Spannungsregler (103, 104, 203, 204, 220, 303) aufweisen, und wobei die Steuereinheit (116, 216) konfiguriert ist, um die schaltbaren Widerstände (109, 110, 209, 210, 309, 310, 311, 312) vorübergehend mit den jeweiligen Ausgängen (105, 106, 305) zu verbinden, wenn die Hauptversorgungsspannung ausgeschaltet ist.

**4.** Energieversorgungsverfahren zum Zuführen von elektrischer Energie in einer Mehrspannungs-Elektronikvorrichtung, wobei das Energieversorgungsverfahren umfasst:

Bereitstellen (S1) einer Hauptversorgungsspannung,

Umwandeln (S2) der Hauptspannung (102, 202, 302) in eine Vielzahl von Betriebsspannungen (107, 108, 207, 208, 221, 307) mit vordefinierten Spannungspegeln und

Verbinden (S3) mindestens eines schaltbaren Widerstands (109, 110, 209, 210, 309, 310, 311, 312) zwischen mindestens einer der Betriebsspannungen (107, 108, 207, 208, 221, 307) und Masse (115, 215, 315), wenn die Hauptversorgungsspannung abgeschaltet wird, so dass die Abfallzeiten der Betriebsspannungen (107, 108, 207, 208, 221, 307) an den Ausgängen (105, 106, 305) der Spannungsregler (103, 104, 203, 204, 220, 303) ausgeglichen sind;

Messen der elektrischen Ströme für die Betriebsspannungen (107, 108, 207, 208, 221, 307);

Bestimmen der Belastung der Ausgänge (105, 106, 305) basierend auf den Strommessungen;

umfassend das Abschalten der Hauptspannung (102, 202, 302) und das Messen einer Abfallzeit für die einzelnen Betriebsspannungen (107, 108, 207, 208, 221, 307), ohne dass einer der schaltbaren Widerstände (109, 110, 209, 210, 309, 310, 311, 312) angeschlossen ist, und

Berechnen des erforderlichen Widerstands für jede Betriebsspannung (107, 108, 207, 208, 221, 307), um eine entsprechende Zeitkonstante auf eine vorbestimmte der gemessenen Abfallzeiten zu reduzieren.

5. Energieversorgungsverfahren nach Anspruch 4, wobei die schaltbaren Widerstände (109, 110, 209, 210, 309, 310, 310, 311, 312) in einer Schaltmatrix angeordnet sind, die mit Quellen der Betriebsspannungen (107, 108, 207, 208, 221, 307) gekoppelt ist, und wobei das Verbinden (S3) das Steuern der Schaltmatrix zum Verbinden bestimmter der schaltbaren Widerstände (109, 110, 209, 210, 309, 310, 311, 312) mit jeweiligen der Ausgänge (105, 106, 305) umfasst.

6. Energieversorgungsverfahren nach einem der vorhergehenden Ansprüche 4 und 5, wobei die schaltbaren Widerstände (109, 110, 209, 210, 309, 310, 311, 312) jeweils einen Widerstand für jeden der Ausgänge (105, 106, 305) der Spannungsregler (103, 104, 203, 204, 220, 303) umfassen, und wobei das Verbinden (S3) das vorübergehende Verbinden der schaltbaren Widerstände (109, 110, 209, 210, 309, 310, 311, 312) mit den jeweiligen Ausgängen (105, 106, 305) umfasst, wenn die Hauptversorgungsspannung abgeschaltet wird.

## Revendications

1. Système d'alimentation en énergie (100, 200, 300) pour un appareil électronique multi-tension, le système d'alimentation en énergie (100, 200, 300) comprenant :

   une alimentation principale en tension (101, 201) configurée pour fournir une tension principale (102, 202, 302), une pluralité de régulateurs de tension (103, 104, 203, 204, 220, 303) configurés chacun pour convertir la tension principale (102, 202, 302) en une tension de fonctionnement respective (107, 108, 207, 208, 221, 307) d'un niveau de tension prédéfini, chaque régulateur de tension comprenant une sortie de tension (105, 106, 305) configurée pour délivrer la tension de fonctionnement respective (107, 108, 207, 208, 221, 307),

   au moins une résistance commutable (109, 110, 209, 210, 309, 310, 311, 312) entre chacune des sorties (105, 106, 305) des régulateurs de tension (103, 104, 203, 204, 220, 303) et la terre (115, 215, 315), et

   une unité de commande (116, 216) configurée pour mettre en marche les résistances commutables (109, 110, 209, 210, 309, 310, 311, 312) entre les sorties (105, 106, 305) des régulateurs de tension (103, 104, 203, 204, 220, 303) et la terre (115, 215, 315) lorsque la tension d'alimentation principale est coupée de telle sorte que les temps de chute des tensions de fonctionnement (107, 108, 207, 208, 221, 307) aux sorties (105, 106, 305) des régulateurs de tension (103, 104, 203, 204, 220, 303) sont égalisés ;

   le système comprenant en outre un capteur de courant (225, 226, 227) pour chacune des sorties (105, 106, 305) des régulateurs de tension (103, 104, 203, 204, 220, 303), dans lequel les capteurs de courant (225, 226, 227) sont configurés pour mesurer le courant pour la sortie respective (105, 106, 305) ;

   dans lequel l'unité de commande (116, 216) est configurée pour déterminer la charge sur les sorties (105, 106, 305) sur la base des mesures de courant ;

   dans lequel l'unité de commande (116, 216) est en outre configurée pour commander l'alimentation en tension principale (101, 201) afin de couper la tension principale (102, 202, 302) et de mesurer un temps de chute pour les tensions de fonctionnement uniques (107, 108, 207, 208, 221, 307) sans qu'aucune des résistances commutables (109, 110, 209, 210, 309, 310, 311, 312) ne soit activée ; et

   dans lequel l'unité de commande (116, 216) est en outre configurée pour calculer pour chaque sortie (105, 106, 305) des régulateurs de tension (103, 104, 203, 204, 220, 303) la résistance nécessaire pour réduire un temps de chute respectif ou une constante de temps à un temps de chute prédéterminé parmi les temps de chute mesurés.

**2.** Système d'alimentation en énergie (100, 200, 300) selon la revendication 1, dans lequel les résistances commutables (109, 110, 209, 210, 309, 310, 311, 312) sont disposées dans une matrice de commutation qui est couplée aux sorties (105, 106, 305) des régulateurs de tension (103, 104, 203, 204, 220, 303) et est contrôlable par l'unité de commande (116, 216) pour connecter certaines des résistances commutables (109, 110, 209, 210, 309, 310, 311, 312) à une des sorties respectives (105, 106, 305).

**3.** Système d'alimentation en énergie (100, 200, 300) selon l'une quelconque des revendications précédentes 1 à 5, dans lequel les résistances commutables (109, 110, 209, 210, 309, 310, 311, 312) comprennent une résistance pour chacune des sorties (105, 106, 305) des régulateurs de tension (103, 104, 203, 204, 220, 303), et dans lequel l'unité de commande (116, 216) est configurée pour connecter temporairement les résistances commutables (109, 110, 209, 210, 309, 310, 311, 312) aux sorties respectives (105, 106, 305) lorsque la tension d'alimentation principale est coupée.

**4.** Méthode d'alimentation en énergie pour fournir de l'énergie électrique dans un dispositif électronique multi-tension, la méthode d'alimentation en énergie comprenant :

fournir (S1) une tension d'alimentation principale,
la conversion (S2) de la tension principale (102, 202, 302) en une pluralité de tensions de fonctionnement (107, 108, 207, 208, 221, 307) de niveaux de tension prédéfinis, et
connecter (S3) au moins une résistance commutable (109, 110, 209, 210, 309, 310, 311, 312) entre au moins une des tensions de fonctionnement (107, 108, 207, 208, 221, 307) et la terre (115, 215, 315) lorsque la tension d'alimentation principale est coupée de telle sorte que les temps de chute des tensions de fonctionnement (107, 108, 207, 208, 221, 307) aux sorties (105, 106, 305) des régulateurs de tension (103, 104, 203, 204, 220, 303) sont égalisés ;
la mesure des courants électriques pour les tensions de fonctionnement (107, 108, 207, 208, 221, 307) ;
la détermination de la charge des sorties (105, 106, 305) sur la base des mesures de courant ;
comprenant la coupure de la tension principale (102, 202, 302) et la mesure d'un temps de chute pour les différentes tensions de fonctionnement (107, 108, 207, 208, 221, 307) sans qu'aucune des résistances commutables (109, 110, 209, 210, 309, 310, 311, 312) ne soit connectée, et
calculer pour chaque tension de fonctionnement (107, 108, 207, 208, 221, 307) la résistance nécessaire pour réduire une constante de temps respective à un des temps de chute mesurés.

**5.** Procédé d'alimentation en énergie selon la revendication 4, dans lequel les résistances commutables (109, 110, 209, 210, 309, 310, 311, 312) sont disposées dans une matrice de commutation qui est couplée à des sources de tensions de fonctionnement (107, 108, 207, 208, 221, 307) et dans lequel la connexion (S3) comprend la commande de la matrice de commutation pour connecter des résistances spécifiques parmi les résistances commutables (109, 110, 209, 210, 309, 310, 311, 312) à des sorties respectives (105, 106, 305).

**6.** Procédé d'alimentation en énergie selon l'une quelconque des revendications 4 et 5 précédentes, dans lequel les résistances commutables (109, 110, 209, 210, 309, 310, 311, 312) comprennent une résistance pour chacune des sorties (105, 106, 305) des régulateurs de tension (103, 104, 203, 204, 220, 303), et dans lequel la connexion (S3) consiste à connecter temporairement les résistances commutables (109, 110, 209, 210, 309, 310, 311, 312) aux sorties respectives (105, 106, 305) lorsque la tension d'alimentation principale est coupée.

Fig. 1

EP 3 410 591 B1

Fig. 2

EP 3 410 591 B1

Fig. 3

EP 3 410 591 B1

EP 3 410 591 B1

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6147477 A
- US 20130207628 A1